Europäisches Patentamt

European Patent Office

Office européen des brevets

(19)

(11) **EP 0 639 630 B1**

(12) **EUROPEAN PATENT SPECIFICATION**

(45) Date of publication and mention
of the grant of the patent:
**01.04.1998   Bulletin 1998/14**

(51) Int Cl.⁶: **C10C 3/02**, C08L 95/00

(21) Application number: **94201550.4**

(22) Date of filing: **01.06.1994**

(54) **Process for stabilizing bitumen-polymer blends**

Verfahren zur Stabilisierung von Bitumen-Polymermischungen

Procédé pour stabiliser des mélanges de bitumes et de polymères

(84) Designated Contracting States:
**AT BE CH DE DK ES FR GB GR IE LI LU MC NL
PT SE**
Designated Extension States:
**SI**

(30) Priority: **19.08.1993  IT   MI931835**

(43) Date of publication of application:
**22.02.1995   Bulletin 1995/08**

(73) Proprietor: **AGIP PETROLI S.p.A.
00142 Roma (IT)**

(72) Inventor: **Italia, Paolo
I-20144 Milano (IT)**

(74) Representative: **Fusina, Gerolamo et al
Ing. Barzanò & Zanardo Milano S.p.A,
Via Borgonuovo, 10
20121 Milano (IT)**

(56) References cited:
**EP-A- 0 343 027            EP-A- 0 458 386
EP-A- 0 496 457            BE-A- 1 002 939
US-A- 4 273 685            US-A- 4 485 144
US-A- 4 507 365**

## Description

The present invention relates to a process for stabilizing bitumen-polymer blends.

It is known that in order to improve the quality of bitumen, in particular from the rehological viewpoint, several types of copolymers, in particular of elastomeric type, are often used.

So, e.g., US-A-4,217,259 teaches using symmetrical radial copolymers constituted by dienic and vinylaromatic blocks; US-A-4,585,816 teaches using block copolymers of a monoalkenyl aromatic monomer and a conjugated diolefin; US-A-3,915,914 teaches using 1-butene homopolymers and copolymers; US-A-3,615,830 claims isoolefin copolymers, in particular polyisobutene.

The most effective polimeric additives seem to be the styrene-diolefin block copolymers, in particular styrene/butadiene and styrene/isoprene block copolymers.

The so modified bitumens can be destined to uses for which the performance of normal bitumens proves to be insufficient. Thus, applications in the field of draining and sound-absorbent conglomerates, in the field of water-proofing systems, and so forth, may be cited.

However, the polymers used in order to modify the properties of bitumens generally display the drawback of being poorly compatible with bitumens. This lack of compatibility manifests itself as a trend of both components to undergo phase separation under resting conditions; in that way, a polymer-rich top layer and a bitumen-rich bottom layer are formed.

The above said drawback is particularly serious when the production locality does not coincide, as it often happens, with the application locality, or when between the preparation time and the application time, a time period elapses.

Therefore, the storage-stability, in particular when hot, of bitumen-polymer blends results to be very important for the purposes of a correct and advantageous use thereof.

In order to solve this problem, BE-858,770; BE-858,771 and BE-870,287 disclose reactions of bitumen with polyolefins containing one or more double bonds. The polyolefin is anchored to bitumen by means of sulfur, which acts as a crosslinking agent.

EP-A-0 496 457 discloses a process which consists in causing the bitumen-polymer blend to react with an unsaturated dicarboxy acid, or dicarboxy acid anhydrides, in particular with maleic anhydride. This process displays the drawback deriving from the toxicity of maleic anhydride.

A process which overcomes the above said drawbacks has been found now.

In accordance therewith, the present invention relates to a process for stabilizing blends of bitumen and thermoplastic polymer, characterized in that the above said blends are caused to react in an inert environment at a temperature comprised within the range of from 210 to 240°C, preferably of from 220 to 230°C, and during a time of from 1 to 4 hours, preferably, of from 100 to 200 minutes, with a vinyl aromatic compound, with bitumen being selected from those having such contents of resins, asphaltenes, aromatics and saturated species, as to comply with the condition Z>5, with "Z" being defined by the expression:

$$Z = K_1 a/b + K_2 c - K_3 d$$

wherein "a" represents the percent content, by weight, of resins fraction, "b" the percent content, by weight, of asphaltenic fraction, "c" the percent content, by weight, of aromatic fraction, "d" the percent content, by weight, of saturated fraction; $K_1 = 0.961$; $K_2 = 0.087$; $K_3 = 0.055$.

The values "a", "b", "c" and "d" are determined by first treating bitumen with n-pentane in order to separate the asphaltenic fraction. The soluble fraction in n-pentane, constituted by malthenes, is analyzed by means of ASTM method D2007. According to this method, after recovering the asphaltenic fraction by adding n-pentane to bitumen and separating the not dissolved portion, the soluble portion (malthenes) is percolated through two mutually superimposed cylindrical columns, wherein the upper column contains decolorizing earth and the lower column contains a layer of decolorizing earth and a silica layer.

The saturated fraction is obtained by collecting the eluate after percolating n-pentane through both said columns.

The resins fraction is obtained by collecting the eluate after percolating a mixture of 1 : 1 toluene : acetone through the upper column containing decolorizing earth.

After separating the above fractions, the aromatics fraction is obtained by means of the same procedure as reported above, by percolating through both superimposed columns a mixture of 1 : 1 toluene : ethyl alcohol.

A bitumen which meets the above cited conditions, i.e., as a value of Z>5, is stabilized with an amount of vinyl aromatic compound comprised within the range of from 0.1 to 0.4 mol, preferably of from 0.15 to 0.3 mol, per 100 g of bitumen.

By "vinyl aromatic compound" those compounds are understood which contain a double bond of olefinic type in the alpha-position to an aromatic ring. Styrene, alpha-methyl styrene, divinyl benzene, vinyl naphthalene, and their alkyl derivatives belong to this category of compounds.

In the preferred embodiment, the vinyl aromatic compound is selected from styrene and alpha-methyl styrene.

The polymers which can be used in mixture with bitumen are copolymers of elastomeric time. Particularly useful are block copolymers containing vinylbenzenes and conjugated dienes, with radial structure. This category of polymers can be represented with the general formula $X(B-A)_m$, wherein A represents a block obtained from monomers of vinylaromatic type, B is a block obtained from dienic monomers, X is a radical deriving from a coupling agent and m is a numeral depending on the used coupling agent, and is normally comprised within the range of from 3 to 5 or more.

Particularly useful for obtaining stable blend are radial copolymers containing polystyrene and polybutadiene blocks (the so-said "SBS" block copolymers), usually with a ratio of styrene:butadiene comprised within the range of from 20: 80 to 40:60 and a molecular weight of from 200,000 to 400,000

The bitumen polymer blends obtained by means of the process according to the present invention result to be stable under conditions of high-temperature storage. Under these conditions, the formation of separated layers or heterogeneous zones is not observed even after long storage time periods.

The above said stabilized blends display good characteristics of flexibility and elasticity, and can be advantageously used as binders for high-performance road conglomerate and water-proofing membranes.

The stable bitumen-polymer blends according to the present invention are prepared in a simple way by blending, at a temperature comprised within the range of from 210 to 240°C, preferably of from 220 to 230°C, the suitable amounts of bitumen, of the polymer and of the unsaturated agent, under an inert blanketing atmosphere, preferably under nitrogen. The necessary time for the interaction to take place is generally comprised within the range of from 1 to 4 hours, preferably of from 100 to 200 minutes.

According to the preferred embodiment of the present invention, during a first step bitumen and polymer are blended at the desired temperature (for a time period of from 20 to 80 minutes) and then, still at the same temperature, the vinylaromatic compound is added, preferably under an inert atmosphere. The resulting blend is kept with stirring, caring of recondensing the vapours, until the desired reaction time is reached.

Sometimes, the lighter fractions present in the mixture may optionally be removed by applying a slight depression at treatment end, or by means of a flowing stream of inert gas.

The process according to the present invention did not evidence any limits as regards the polymer content in the stabilized bituminous blend. However, it is preferable, also owing to self-explanatory reasons of cheapness, that the polymer is present in an amount comprised within the range of from 1 to 15% by weight based on bitumen.

According to a more preferred embodiment of the process according to the present invention, bitumen is admixed with polymer amounts corresponding to levels of from 5 to 20% of polymer, the stabilization of the blend is carried out and then the so stabilized blend is diluted with fresh bitumen in order to obtain a blend in which the end content of polymer is comprised within the range of from 1 to 15% by weight. In that way, by adding fresh bitumen to the stabilized blend, a stable polymer-bitumen composition can be obtained with the desired fluidity characteristics.

Both bitumens, i.e., the initially used bitumen and bitumen used for said dilution, must anyway comply with the constraint of "Z" being higher than 5.

The following examples are reported in order to better illustrate the present invention.

## EXAMPLES

In the following experimental tests, two different bitumens having the following characteristics were used:

|  | Bitumen 1 | Bitumen 2 |
|---|---|---|
| Penetration, at 25°C (dmm) | 193 | 98 |
| Softening point (°C) | 37.5 | 44.5 |
| Penetration index | -1.35 | -1.01 |
| Fraass break point (°C) | -17 | -12 |
| Viscosity at 60°C (Pa.s) | 50 | 116 |

The above said bitumens displayed the following composition, wherein the indicated levels are expressed as percent contents, by weight:

|  | Bitumen 1 | Bitumen 2 |
|---|---|---|
| C5 Asphaltenes % | 13.3 | 16.0 |
| Resins % | 69.0 | 63.0 |

(continued)

| | Bitumen 1 | Bitumen 2 |
|---|---|---|
| Aromatics % | 10.0 | 12.1 |
| Saturated species % | 7.7 | 8.9 |

From the above values of percent levels, the "Z" value results to be of 5.43 for Bitume 1, and be of 4.35 for Bitumen 2, which cannot be used for the process according to the present invention.

The storage stability of bitumen-polymer blends is evaluated by measuring, at time intervals, the difference between the softening point of the upper layer and the softening point of the lower layer of the mixture submitted to storage inside a cylindrical container at 170°C.

Example 1

20.3 g of SBS polymer is added, under an inert atmosphere, to 220.8 g of Bitumen 1, heated at 225°C, and the resulting blend is kept stirred for 30 minutes. Then, 4.3 g of styrene is added with the blend being kept with stirring for 90 minutes, still at 225°C.

The added styrene amount corresponds to 0.204 mol per each 100 g of SBS, i.e., to about 1.75% of the reacting mass. The product displays the following characteristics:

* Penetration at 25°C: 107 dmm;
* Ring-ball softening point: 104°C;
* Penetration index: +9.32.

After a 10-days storage, the softening points of both the top and bottom portions, are perfectly the same.

Example 2

By operating similarly to as disclosed in Example 1, the end mixture, after the reaction with styrene, is diluted, at 180°C, during 30 minutes, with 91.5 grams of bitumen type 1, in order to reduce the polymer level down to 6.0%.

The diluted product displays the following characteristics:

* Penetration at 25°C: 100 dmm;
* Softening point: 101°C;
* Penetration index: +8.82.

After a 5-days storage, the softening points of the top and bottom portions of the blend display a difference of 2°C, thus demonstrating that modified bitumen retains its stability even after dilution with fresh bitumen.

Example 3

20.3 g of SBS polymer is added, under an inert atmosphere, to 220.8 g of Bitumen 1, heated at about 225°C, and the resulting blend is kept stirred for 30 minutes. Then, 5.5 g of alpha-methyl styrene (0.230 mol) is added, with the blend being kept with stirring for 90 minutes, still at about 225°C.

The resulting blend had a penetration of 88 dmm, and a softening point, by the ring-ball method, of 103.5°C.

After a 5-days storage at 170°C inside cylindrical containers, no differences could be observed between the top and bottom softening points. After a 10-days storage, the difference between the softening points resulted to be of 1.5°C.

Example 4 (comparison example)

The preparation is repeated as disclosed in Example 1, using the same amounts of Bitumen 1 and polymer, but without adding any further additives.

After an only 1-day storage time at 170°C, the difference between the softening points of the top portion and of the bottom portion was of 29°C.

Example 5 (comparison example)

The preparation is repeated as disclosed in Example 1, by operating in exactly the same way and using the same amounts of reactants, with the only difference that Bitumen 2, the "Z" value of which is of 4.35, is used. After an only 1-day storage time, the difference between the softening points of the top portion and of the bottom portion is of 58°C.

Example 6 (comparison example)

The process is repeated by operating in exactly the same way as disclosed in Example 1, with the only difference being the temperature value, which is of exactly 200°C, rather than 225°C, as in Example 1.
The resulting product displays the following characteristics:

* Penetration at 25°C: 107 dmm;
* Ring-ball softening point: 113°C

After 1 day of storage at 170°C, the difference between the softening points of the top portion and of the bottom portion is of 41.5°C.

## Claims

1. Process for stabilizing blends of bitumen and thermoplastic polymer, characterized in that the above said blends are caused to react in an inert environment at a temperature comprised within the range of from 210 to 240°C, and during a time of from 1 to 4 hours, with a vinyl aromatic compound, with bitumen being selected from those having such contents of resins, asphaltenes, aromatics and saturated species, as to comply with the condition Z>5, with "Z" being defined by the expression:

$$Z = K_1 a/b + K_2 c - K_3 d$$

   wherein "a" represents the percent content, by weight, of resins fraction, "b" the percent content, by weight, of asphaltenic fraction, "c" the percent content, by weight, of aromatic fraction, "d" the percent content, by weight, of the saturated fraction; $K_1 = 0.961$; $K_2 = 0.087$; $K_3 = 0.055$.

2. Process according to claim 1, characterized in that said vinyl aromatic compound is selected from styrene, alpha-methyl styrene, divinyl benzene, vinyl naphthalene, and their alkyl derivatives.

3. Process according to claim 2, characterized in that said vinyl aromatic compound is selected from styrene and alpha-methyl styrene.

4. Process according to claim 1, in which the content of thermoplastic polymer is comprised within the range of from 1 to 15%, by weight, relatively to bitumen.

5. Process according to claim 1, in which the thermoplastic polymer is a radial copolymer containing polystyrene and polybutadiene blocks.

6. Process according to claim 1, in which the amount of vinyl aromatic compound is comprised within the range of from 0.1 to 0.4 mol per 100 g of thermoplastic polymer.

7. Process according to claim 6, in which the amount of vinyl aromatic compound is comprised within the range of from 0.15 to 0.3 mol per 100 g of thermoplastic polymer.

8. Process according to claim 1 for stabilizing blends of bitumen having Z>5 and thermoplastic polymer, which comprises:

   (a) blending, under an inert atmosphere, bitumen and thermoplastic polymer at a temperature comprised within the range of from 210 to 240°C;
   (b) adding a vinyl-aromatic compound to the mixture obtained from above (a) step, still at a temperature comprised within the range of from 210 to 240°C;
(c) keeping the resulting blend at that temperature for a total time, including (a) and (b) steps, comprised within the range of from 1 to 4 hours.

9. Process according to claim 1, for stabilizing blends of bitumen having Z>5 and thermoplastic polymer, which comprises:

(a) heating a blend of the above said bitumen and a polymer, containing from 5 to 20% by weight of thermoplastic polymer, with a vinyl aromatic compound, at a temperature comprised within the range of from 210 to 240°C, during a time comprised within the range of from 1 to 4 hours,
(b) diluting the resulting blend with fresh bitumen in order to produce a stabilized bitumen-polymer blend containing from 1 to 15% of thermoplastic polymer.

**Patentansprüche**

1. Verfahren zur Stabilisierung von Gemischen aus Bitumen und thermoplastischem Polymer, dadurch gekennzeichnet, daß man vorstehende Gemische in einer inerten Umgebung bei einer Temperatur im Bereich von 210 bis 240 °C über einen Zeitraum zwischen 1 und 4 Stunden mit einer aromatischen Vinylverbindung umsetzt, wobei das Bitumen aus denjenigen ausgewählt wird, die einen solchen Gehalt an Harzen, Asphalten, aromatischen Verbindungen und gesättigten Species aufweisen, das es der Bedingung Z>5 genügt, wobei "Z" durch den Ausdruck:

$$Z = K_1\, a\, /\, b + K_2\, c - K_3\, d$$

definiert ist,
in dem "a" den prozentualen gewichtsmäßigen Gehalt der Harzfraktion, ",b" den prozentualen gewichtsmäßigen Gehalt der asphaltartigen Fraktion, "c" den prozentualen gewichtsmäßigen Gehalt der aromatischen Fraktion, "d" den prozentualen gewichtsmäßigen Gehalt der gesättigten Fraktion bedeutet, $K_1 = 0{,}961$, $K_2 = 0{,}087$ und $K_3 = 0{,}055$.

2. Verfahren nach Anspruch 1, dadurch gekennzeichnet, daß die aromatische Vinylverbindung aus Styrol, α-Methylstyrol, Divinylbenzol, Vinylnaphthalin und deren Alkylderivaten ausgewählt wird.

3. Verfahren nach Anspruch 2, dadurch gekennzeichnet, daß die aromatische Vinylverbindung aus Styrol und α-Methylstyrol ausgewählt wird.

4. Verfahren nach Anspruch 1, in dem der Gehalt an thermoplastischem Polymer relativ zu Bitumen im Bereich von 1 bis 15 Gewichts-% liegt.

5. Verfahren nach Anspruch 1, in dem das thermoplastische Polymer ein radiales Copolymer ist, das Polystyrol und Polybutadienblöcke enthält.

6. Verfahren nach Anspruch 1, in dem die Menge an aromatischer Vinylverbindung im Bereich von 0,1 bis 0,4 Mol je 100 g des thermoplastischen Polymers liegt.

7. Verfahren nach Anspruch 6, in dem die Menge an aromatischer Vinylverbindung im Bereich von 0,15 bis 0,3 Mol je 100 g des thermoplastischen Polymers liegt.

8. Verfahren nach Anspruch 1 zur Stabilisierung von Gemischen aus Bitumen, das einen Z-Wert > 5 aufweist, und thermoplastischem Polymer, umfassend:

(a) Mischen von Bitumen und thermoplastischem Polymer bei einer Temperatur im Bereich von 210 bis 240 °C unter einer inerten Atmosphäre,
(b) Zugeben einer aromatischen Vinylverbindung zum Gemisch, das aus dem vorstehenden Schritt (a) erhalten wurde, immer noch bei einer Temperatur im Bereich von 210 bis 240 °C,
(c) Halten des entstandenen Gemischs bei dieser Temperatur über eine Gesamtdauer im Bereich von 1 bis 4 Stunden, einschließlich der Schritte (a) und (b).

**9.** Verfahren nach Anspruch 1 zur Stabilisierung von Gemischen aus Bitumen, das einen Z-Wert > 5 aufweist, und thermoplastischem Polymer, umfassend:

(a) Erhitzen eines Gemischs aus vorstehendem Bitumen und einem thermoplastischen Polymer, das 5 bis 20 Gewichts-% thermoplastisches Polymer enthält, mit einer aromatischen Vinylverbindung bei einer Temperatur, die im Bereich von 210 bis 240 °C liegt, über einen Zeitraum, der im Bereich von 1 bis 4 Stunden liegt,
(b) Verdünnen des entstandenen Gemischs mit frischem Bitumen, um ein stabilisiertes Bitumen-Polymergemisch herzustellen, das 1 bis 15 % des thermoplastischen Polymers enthält.

**Revendications**

**1.** Procédé permettant de stabiliser des mélanges de bitumes et de polymères thermoplastiques, caractérisé en ce que lesdits mélanges sont mis à réagir dans un environnement inerte à une température comprise entre 210 et 240°C, et pendant une durée comprise entre 1 et 4 heures, avec un composé vinyle aromatique, les bitumes étant choisis parmi ceux ayant des teneurs en résines, asphaltènes, espèces aromatiques et saturées, répondant à l'inégalité Z>5, "Z" étant défini par l'expression:

$$Z = K_1 a/b + K_2 c - K_3 d$$

où "a" représente la teneur en pourcentage, en poids, de fractions de résines, "b" la teneur en pourcentage, en poids, de fractions asphalténiques, "c" la teneur en pourcentage, en poids, de fractions aromatiques, et "d" la teneur en pourcentage, en poids, de fractions saturées ; et où $K_1 = 0{,}961$, $K_2 = 0{,}087$ ; $K_3 = 0{,}055$.

**2.** Procédé selon la revendication 1, caractérisé en ce que ledit composé vinyle aromatique est choisi parmi le styrène, l'alpha-méthylstyrène, le divinylbenzène, le vinylnaphtalène, et leurs dérivés alkyles.

**3.** Procédé selon la revendication 2, caractérisé en ce que ledit composé vinyle aromatique est choisi parmi le styrène et l'alpha-méthylstyrène.

**4.** Procédé selon la revendication 1, dans lequel la teneur en polymères thermoplastiques est comprise entre 1 et 15%, en poids, par rapport au bitume.

**5.** Procédé selon la revendication 1, dans lequel le polymère thermoplastique est un copolymère radial contenant des séquences polystyrène et polybutadiène.

**6.** Procédé selon la revendication 1, dans lequel la quantité de composés vinyles aromatiques est comprise entre 0,1 et 0,4 mole par 100 g de polymères thermoplastiques.

**7.** Procédé selon la revendication 6, dans lequel la quantité de composés vinyles aromatiques est comprise entre 0,15 et 0,3 mole par 100 g de polymères thermoplastiques.

**8.** Procédé selon la revendication 1, permettant de stabiliser des mélanges de bitumes répondant à l'inégalité Z>5 et de polymères thermoplastiques, qui comprend :

(a) le mélange, dans une atmosphère inerte, de bitumes et de polymères thermoplastiques à une température comprise entre 210 et 240°C ;
(b) l'ajout d'un composé vinyle aromatique au mélange obtenu à l'étape (a) mentionnée ci-dessus, toujours à une température comprise entre 210 et 240°C ;
(c) le maintien du mélange obtenu à cette température pendant une durée globale, comprenant les étapes (a) et (b), comprise entre 1 et 4 heures.

**9.** Procédé selon la revendication 1, permettant de stabiliser des mélanges de bitumes répondant à l'inégalité Z>5 et de polymères thermoplastiques, qui comprend :

(a) le chauffage d'un mélange desdits bitumes mentionnés ci-dessus et d'un polymère, contenant 5 à 20% en poids de polymères thermoplastiques, avec un composé vinyle aromatique, à une température comprise entre 210 et 240°C, pendant une durée comprise entre 1 et 4 heures,
(b) la dilution du mélange obtenu avec du bitume frais afin de produire un mélange bitumes-polymères stabilisé contenant 1 à 15% de polymères thermoplastiques.